# EUROPEAN PATENT APPLICATION

(11) **EP 1 251 659 A1**
(43) Date of publication of application: **23.10.2002**
(21) Application number: 01906281.9
(22) Date of filing: 23.02.2001
(51) Int. Cl.: H04L 12/28

(54) **ASYNCHRONOUS TRANSMISSION METHOD**

(30) Priority: 23.02.2000 JP 2000045448; 01.08.2000 JP 2000232590; 17.01.2001 JP 2000009148
(71) Applicant: Sharp Kabushiki Kaisha, Osaka-shi, Osaka 545-8522 (JP)
(72) Inventor: GOHDA, Wataru, Chiba-shi, Chiba 262-0023 (JP); NANBA, Hideo, Chiba-shi, Chiba 266-0005 (JP); IKEDA, Soutarou, Ichihara-shi, Chiba 299-0117 (JP)
(74) Representative: Müller - Hoffmann & Partner
(86) International application number: JP0101384
(87) International publication number: WO01063845

(57) **Abstract**

A method for asynchronous communication through an IEEE 1394 bus in a wireless environment (wireless bus) by allowing a hub station to integratedly manage information unique to wireless communication. Each of wireless terminals sends a request for transmission of an asynchronous packet along with the wireless terminal identifier of the destination in a status packet for reporting the receive status of another wireless terminal to the hub station. The hub station performs, according to the information, allocation of transaction label, selection of optimum modulation method and coding rate, decision of relay, decision of polling priority, and reports the results to the wireless terminal through a polling packet representing the send privilege of an asynchronous packet. The wireless terminal that obtains the send privilege and the wireless terminal of the destination send/receive data according to the information, thereby transmitting an asynchronous packet in requisite minimum procedures.

## Description

### Technical field

The present invention relates to an asynchronous transmission method in a wireless bus, and specifically to an asynchronous transmission method for realizing multimedia data transfer equivalent to an IEEE 1394 (standard set by the Institute of Electrical and Electronics Engineers Standards Association) serial bus in a wireless environment.

### Background art

In recent years, by IEEE 1394, that is, high performance serial bus standards suitable for transfer of multimedia data such as video data and audio data, environmental improvements for transferring multimedia data at high speed in real time among digital devices such as televisions, videos, and personal computers have been developed.

In the IEEE 1394 bus, two data transfer modes of an isochronous transfer (real time transfer mode) mode and an asynchronous transfer mode are defined.

The isochronous transfer mode previously reserves bands and guarantees sending/reception of a packet of a certain amount at a regular interval (each 125 µs). The isochronous transfer mode enables high speed processing, so that the isochronous transfer mode is suitable for applications such as video and audio. In the isochronous transfer mode, a destination node only receives data and does not respond to a sender that the data has been received.

On the contrary, the asynchronous transfer mode suitable for usual file transfer, controls among equipments, and the like, literally transfers packets asynchronously, and has a lower priority than the isochronous transfer mode. The asynchronous transfer mode is used in order that a source node requests and confirms a service called a transaction for a destination node. In the transaction processing, after reception of data, the destination node responds a result of the reception to the source node as an acknowledge signal packet (hereinafter, abbreviated to ACK) for a communication request.

The ACK packet is effective means for enhancing reliability. If the sender cannot receive the ACK packet, the sender determines that sending of an asynchronous packet has failed, and performs proper processing, for example resending of the asynchronous packet.

Brief description will be made on a format of the packet in the asynchronous transfer mode. With regard to the packet format, the packet is composed of a data row of 32 bits, and includes a header section and a data section like as a usual packet.

The header section includes a responder node identifier (destination ID) for identifying a receiver device and a requester node identifier (source ID) for identifying a sender device.

The header section includes a field of 6 bits called a transaction label (tLabel: hereinafter, referred to as t1), which is a unique tag allocated to each unresolved transaction sent by the device and is the number for allowing a request packet to correspond to a response packet.

Furthermore, the header section includes a transaction code (tCode), which is a code for specifying types of a packet format and the transaction required to be executed.

The transaction code indicates a type of the packet. The transaction code indicates which the transaction is a read transaction (read), a write transaction (write), or a lock transaction (lock), and indicates which the packet is a request packet or a response packet.

The read transaction is a transaction for reading a value of a particular address of the receiver. The write transaction is a transaction for writing a value in a particular address of the receiver. The lock transaction is a transaction for transferring an address and data to the receiver, and performing particular processing (exchange of values or the like) by a combination of the data and data of the specified address to update the value of the specified address.

A combination of the requester node identifier (source ID) of the request side device, the responder node identifier (destination ID) of the response side device, and the transaction label (t1) enables each transaction to be identified as a unique one.

Exchange of messages by the transactions is realized by a combination of a transaction request and a transaction response. In this case, until the source node receives the transaction response after sending the transaction request, the transaction request different from the aforementioned transaction request or another transaction response may occur.

Here, in usage of the transaction label (t1) for identifying the plurality of transactions, there is a condition as follows. After the source node sends the transaction request having a transaction label N to a node M, when the transaction response corresponding to the transaction request is not returned, each node must not send the transaction request having the transaction label N to the node M.

Specifically, the transaction is identified by the combination of three items of the requester node identifier, the responder node identifier, and the transaction label. In other words, each node needs to monitor all transactions in order to determine the transaction label.

On the other hand, when such an asynchronous packet is sent, a send privilege of the asynchronous packet must be obtained by a method called equal arbitration. In the equal arbitration, each terminal obtains the send privilege for the bus once for a certain period of time.

Devices compliant with the IEEE 1394 bus are connected by a shielded twist pair cable. As the devices compliant with the IEEE 1394 bus are increased, cable wiring becomes a larger problem. Accordingly, in recent years, a requirement for multimedia data transfer by radio equivalent to the IEEE 1394 bus has been increased.

In the conventional IEEE 1394 bus, since the nodes are connected by the cables as aforementioned, there is a premise that data is surely sent to all the nodes. However, in the IEEE 1394 bus in the wireless environment (hereinafter, referred to as a wireless bus), all the nodes cannot send/receive data with each other depending on installation positions.

In such a case, each node cannot monitor all the transactions. Specifically, there is a possibility that the different transactions using the same transaction label are generated, resulting in a problem of causing malfunctions.

As a modulation method in the wireless data communication, PSK and QAM modulation are known. In order to allow higher speed transmission, a multilevel modulation such as 16 QAM and 64 QAM has been proposed.

In a case of a good condition such as a short distance, the employment of such multilevel modulation allows high transmission speed to be reserved. However, conversely, in a case of a bad condition, such as a long distance and a communication over a wall, many errors occur, and the communication cannot be practically performed.

Therefore, for constructing the wireless bus more widely while keeping a quality, it is not a good idea that the modulation method and coding rate is fixed to one type. For example, Japanese Patent Laid-open 11-266256 has proposed a method of properly selecting the optimum modulation method and coding rate at any given time.

However, in this case, a problem occurs where both the source node and the destination node need to previously know the selected modulation /coding rate by any means.

Furthermore, as described above, all the terminals cannot always communicate with each other directly. Accordingly, when the communication is required even in a situation that the direct communication cannot be performed, it is conceived that relay is requested from another node. However, in such a case, a problem also occurs where it must be previously judged whether or not the relay is necessary and the node to be asked for the relay must be previously determined.

The equal arbitration in the case of performing the asynchronous packet transfer over the IEEE 1394 bus utilizes a feature of a wired communication, so that another arbitration method needs to be used in the wireless bus. As one of the methods, a polling system is conceived and realized by means as follows.

In the polling system, a certain terminal in the bus gives a send privilege of the asynchronous packet by sending polling packets to other terminals in the bus. Here, if the asynchronous packet to be transmitted exists, the terminal given the send privilege starts sending of the asynchronous packet.

At this time, when the asynchronous packet to be transmitted does not exist, since the terminal given the send privilege cannot send data, the polling packet becomes wasted information. Originally, in the polling system, collisions do not occur, so that the band can be efficiently used. However, in view of a situation where the band for transmitting the asynchronous packet is narrow, such as a time when a lot of isochronous bands are reserved, a problem occurs where the band occupied by the polling packets cannot be neglected.

The present invention has been made in consideration with these problems, and an object of the present invention is to provide an efficient asynchronous transmission method in the IEEE 1394 network under the wireless environment (wireless bus) by making a hub station to integratedly manage the transaction label (t1), the modulation method and coding rate, and the relay determination necessary for the asynchronous transfer in the IEEE 1394 network, and furthermore by realizing a polling accompanied with priority processing.

### Disclosure of the present invention

According to a first invention of the present application, each of wireless terminals (nodes) notifies a hub station of send status of an asynchronous packet together with a destination node identifier in a status report packet for reporting link status among all the nodes to the hub station.

According to a second invention of the present application, the hub station allocates a transaction label based on the asynchronous packet send status and the asynchronous packet destination terminal, of which the hub station is notified.

According to a third invention of the present application, when a send privilege of the asynchronous packet is sent to each wireless terminal by polling, the hub station notifies the source terminal of the asynchronous packet of the transaction label in a polling packet.

According to a fourth invention of the present application, when a send privilege of the asynchronous packet is sent to each wireless terminals by polling, the hub station determines an optimum modulation method and coding rate (sending parameter) between the source terminal and the destination terminal of the asynchronous packet based on the receive status information, the asynchronous packet send status, and the asynchronous packet destination terminal, which are reported in the status report packet, and the hub station performs notification in the polling packet.

According to a fifth invention of the present application, when a send privilege of the asynchronous packet is sent to each wireless terminal by polling, the hub station judges whether or not relay is necessary between the source terminal and the destination terminal of the asynchronous packet based on the receive status information, the asynchronous packet send status, and the asynchronous packet destination terminal, which are reported in the status report packet, and the hub station performs notification in the polling packet.

According to a sixth invention of the present application, the wireless terminal having obtained the send privilege of the asynchronous packet by the polling from the hub station transmits the asynchronous packet based on sending parameters of which the wireless terminal is notified in the polling packet.

According to a seventh invention of the present application, the wireless terminal designated as the destination terminal of the asynchronous packet by the polling of the hub station receives the asynchronous packet.

According to an eighth invention of the present application, the wireless terminal notifies the hub station of send completion status of the asynchronous packet together with the destination node identifier and the used transaction label in the status report packet.

According to an ninth invention of the present application, the hub station releases the transaction label based on the asynchronous packet send completion status, the asynchronous packet send completion destination terminal, and the transaction label, of which the hub station is notified.

According to a tenth invention of the present application, a sending order of the polling packet for giving the send privilege of the asynchronous packet to the node is determined based on a type of the asynchronous packet send status in the status report packet.

According to an eleventh invention of the present application, the hub station gives the send privilege of the asynchronous packet to each of the asynchronous packet and the ACK as the asynchronous packet send status contained in the status report packet in accordance with the different priorities.

According to a twelfth invention of the present application, the hub station gives the send privilege of the asynchronous packet to a retry packet as the asynchronous packet send status contained in the status report packet by higher priority.

According to a thirteenth invention of the present application, the notification is made for the plurality of asynchronous packet destination terminals.

According to a fourteenth invention of the present application, the asynchronous packet source terminal is notified of the asynchronous packet destination terminal requiring the relay among the plurality of asynchronous packet destination terminals.

In the present invention, employment of the above constitution allows the operation as follows.

The hub station releases the specified transaction label based on asynchronous packet send completion status contained in the status report packet sent from the wireless terminal (node) and the destination node information accompanied therewith.

The hub station allocates the transaction label based on the sending request of the asynchronous packet contained in the status report packet sent from the wireless terminal (node) and the destination node information associated therewith.

Furthermore, the hub station generates a topology map of the entire wireless bus from link status information also contained in the status report packet. The hub station selects the optimum modulation method and coding rate between the source node of the status report packet and the destination node specified in the sending request of the asynchronous packet based on the topology map. Moreover, when the source node and the destination node cannot directly communicate with each other, the hub station decides the relay node.

The wireless terminal (node) to be given the send privilege of the asynchronous packet is notified of the sending parameters determined in such a manner by the polling packet from the hub station. The wireless terminal (node) having obtained the send privilege sends the asynchronous packet based on the sending parameters specified in the polling packet.

The asynchronous packet destination wireless terminal (node), which is also specified in the polling packet, receives the asynchronous packet based on the sending parameter specified in the polling packet.

The hub station preferentially gives the send privilege of the asynchronous packet to the node having the asynchronous packet to be sent in accordance with the type of the asynchronous packet send status in the status report packet.

### Brief description of the drawings

Fig. 1 is an explanatory view showing a topology of a wireless bus in an embodiment of the present invention.
Fig. 2 is an explanatory view showing a wireless frame format in the embodiment of the present invention.
Fig. 3 is an explanatory view showing contents of a status report packet in the embodiment of the present invention
Fig. 4 is an explanatory view showing an example of receive status of a node 0 in the embodiment of the present invention.
Fig. 5 is an explanatory view showing contents of a polling packet in the embodiment of the present invention.
Fig. 6 is a functional block diagram schematically showing a constitution of a hub station in the embodiment of the present invention.
Fig. 7 is a functional block diagram schematically showing a constitution of a node in the embodiment of the present invention.
Fig. 8 is a flowchart showing a decision procedure of asynchronous sending parameters in the hub station in the embodiment of the present invention.
Fig. 9 is an explanatory view showing an initial state of an example of a transaction label map in the embodiment of the present invention.
Fig. 10 is an explanatory view showing change in the example of the transaction label map in the embodiment of the present invention.
Fig. 11 is an explanatory view showing an initial state of another example of a transaction label map in the embodiment of the present invention.
Fig. 12 is an explanatory view showing change in another example of the transaction label map in the embodiment of the present invention.
Fig. 13 is an explanatory view showing an example of a topology map of the embodiment of the present invention.
Fig. 14 is a flowchart showing a reception procedure of the polling packet in the embodiment of the present invention.
Fig. 15 is a functional block diagram schematically showing another constitution of the hub station in the embodiment of the present invention.
Fig. 16 is a flowchart showing another decision procedure of the asynchronous sending parameters in the hub station in the embodiment of the present invention.
Fig. 17 is a flowchart showing another reception procedure of the polling packet in the embodiment of the present invention.

### Best mode for carrying out the invention

Next, description will be made in detail on an asynchronous transmission method of a preferred embodiment of the present invention with reference to the accompanying drawings.

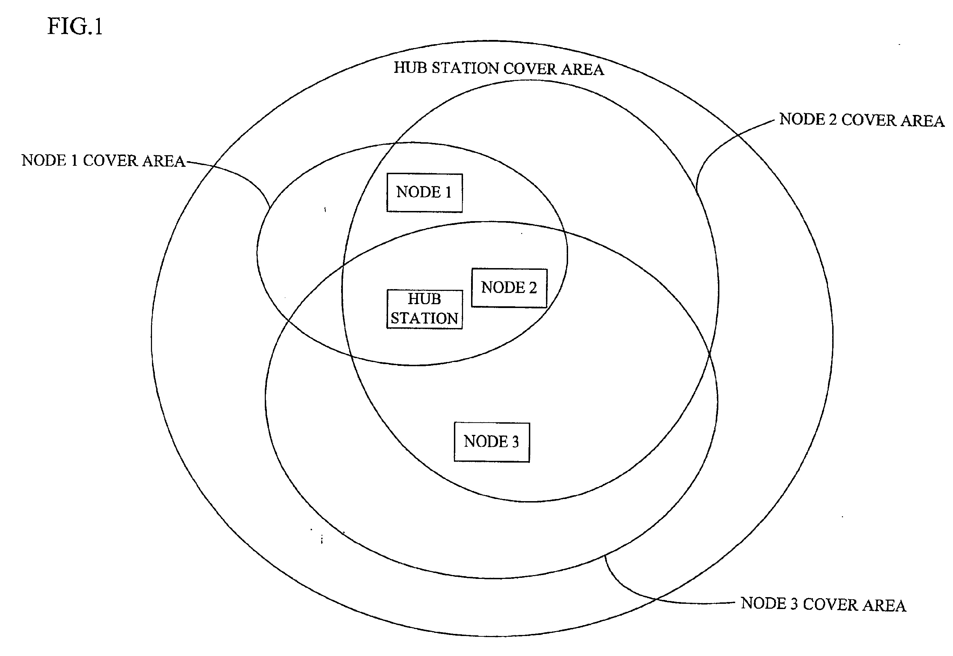

Fig. 1 is an explanatory view schematically showing a constitution of a wireless bus in the embodiment of the present invention. In Fig. 1, portions surrounded by ellipses indicate cover areas where the individual nodes can communicates.

For constructing a wireless bus network, a node called a hub station for conducting a control or a management of the wireless bus network is necessary. As a constitution form of the network, one wireless bus has one hub station, and a star topology in which the hub station is at the center thereof is employed.

Specifically, each of active nodes on the wireless bus network always retains in a state where two-way communication with the hub station is enabled. Main functions of the hub station are shown below.

### (1) Wireless bus resource management

The hub station performs management of the bus topology and management of a resource necessary for realizing the isochronous or asynchronous transmission.

### (2) Communication timing control

The hub station notifies each node of a timing allowing a frame start and the isochronous transmission.

A node identifier is allocated to the node participating in one wireless bus for unique identification in the wireless bus. The node identifier is dynamically allocated when the wireless bus is first constructed, or when a reset occurs in the wireless bus.

A data flow is premised on a direct communication between the nodes. However, the direct communication sometimes cannot be performed depending on installation positions of individual nodes. For example, when the individual nodes are in a situation shown in Fig. 1, a node 1 and a node 2, and a node 2 and a node 3 can directly communicate with each other, but the node 1 and the node 3 cannot directly communicate with each other.

In other words, the node 3 is a hidden terminal viewed from the node 1. In this case, for the communication between the node 1 and the node 3, the communication may be relayed by the hub station or the conforming node.

Depending on a location of each node in the wireless bus or the surrounding environment, a modulation method and coding rate are properly changed. When higher communication quality can be secured in a short distance communication by such change, the modulation method and coding rate realizing the highest data speed is selected.

On the other hand, even in a situation of communicating in a long distance or over a wall, the modulation method and coding rate for performing a communication resistant to noise are selected, so that the wireless bus can be constructed mode widely while retaining a certain level of communication quality.

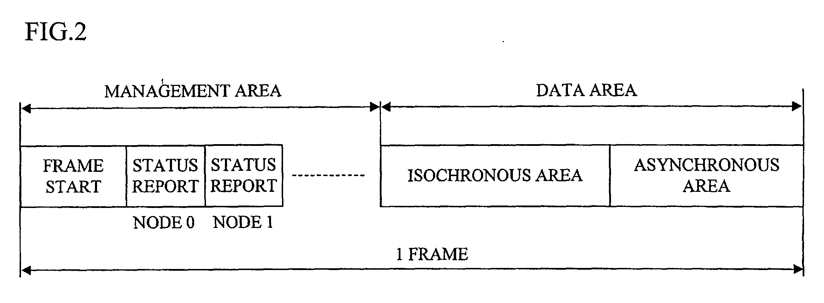

Fig. 2 is an explanatory view showing a constitution of a wireless frame used by the wireless bus. In Fig. 2, a management area is an area for communication between the hub station and each node to perform maintenance of the frame, confirmation of the communication quality between the nodes, or the like.

The communication in the management area uses the common modulation method and coding rate. The management area is composed of two areas of frame start information and status report information.

The frame start area is an area where the hub station performs sending for each node to notify all the nodes in the wireless bus of a start of the frame. Main contents thereof are:
- Frame synchronization information
- Wireless bus parameter
- Management information.

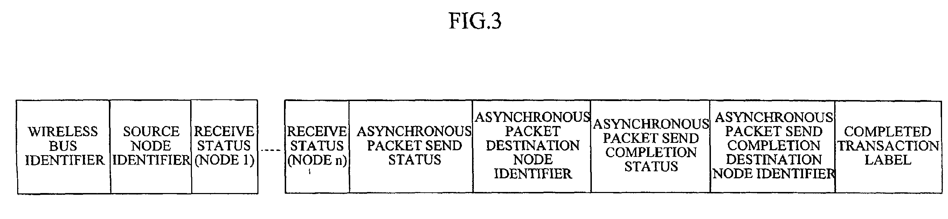

The status report area is an area where each node participating in the wireless bus reports its own status. As a packet constitution thereof, for example as shown in Fig. 3, information as the followings are contained. However, all the bits of information are not necessarily provided.

### (1) Wireless bus identifier

The wireless bus identifier is used for identifying the wireless bus in a case where there is another wireless bus in the vicinity thereof. The wireless bus identifier is unnecessary when there is another identifying means such as a method of identifying the network by a scramble pattern.

### (2) Source node identifier

The source node identifier is set to the node identifier sending the status report information. The source node identifier is unnecessary when there is another identifying means such as means of assigning areas in an order of the node identifiers in the status report area.

### (3) Receive status of another node

Each node measures a receive signal power each time of receiving the status report information from another node in the frame management area. Based on a result thereof, each node reports receive status indicating which level of intensity the data sent from the corresponding node can be received in the status report sent by the node itself.

The information is used as an indication for selecting the optimum modulation method and coding rate between any two nodes.

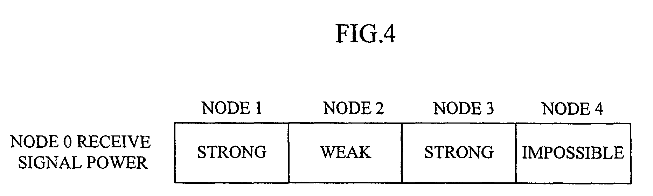

For example, Fig. 4 shows the receive status of the node 0. In this case, data sent from each of the nodes 1 and 3 has strong received field intensity at the node 0. Accordingly, when each of the nodes 1 and 3 transmits data to the node 0, the modulation method and coding rate realizing the highest data speed is selected.

### (4) Asynchronous packet send status

On receiving a request for sending of the asynchronous packet from an application, each node notifies the hub station that the node is ready for sending the asynchronous packet.

As the asynchronous packet send status, there are the following types of status:
- No transaction sending
- Waiting for new transaction sending
- Waiting for normal transaction sending

On being notified of the status of waiting for new transaction sending or waiting for normal transaction sending, the hub station prepares to send the polling packet to the node.

The status of waiting for new transaction sending indicates a case of sending the first asynchronous packet in the transaction request, and means a request for allocation of a transaction label.

The packets used in one transaction request or response are intended to be dividedly sent as the plurality of asynchronous packets. Notification of the allocated transaction label is made in the polling packet.

Similarly, as the asynchronous packet send status, the following types of status can be also conceived.
- No asynchronous packet sending
- Waiting for asynchronous packet sending
- Waiting for ACK sending

When the hub station is notified of the status of waiting for asynchronous packet sending or waiting for ACK sending, the hub station prepares to send the polling packet to the node.

At this time, the hub station determines a priority of an asynchronous packet send privilege of each node from the type of the asynchronous packet send status received from the node.

For example, the priority for giving the send privilege to each node is made higher in the order of the status of waiting for ACK sending, the status of waiting for asynchronous packet sending, and the status of no asynchronous packet sending.

In addition to the above status, retry sending may be added to each of the status of waiting for asynchronous packet sending and the status of waiting for ACK sending. In this case, the asynchronous packet send status includes the following five types:
- No asynchronous packet sending
- Waiting for asynchronous packet sending
- Waiting for asynchronous packet sending (retry)
- Waiting for ACK sending
- Waiting for ACK sending (retry)

As an example of the priority order in this case, priorities are made higher in the order of the status of waiting for ACK sending (retry), the status of waiting for asynchronous packet sending (retry), the status of waiting for ACK sending, the status of waiting for asynchronous packet sending, and the status of no asynchronous packet sending. It is more efficient to give the send privilege in such an order.

### (5) Asynchronous packet destination node identifier

When the asynchronous packet send status is the status of waiting for new transaction sending or waiting for normal transaction sending, The asynchronous packet destination node identifier is set to the node identifier of the receiver of the asynchronous packet.

Similarly, when the asynchronous packet send status is the status of waiting for asynchronous packet sending or waiting for ACK sending, the asynchronous packet destination node identifier is set to the node identifier of the receiver of the asynchronous packet.

Furthermore, when the packets having the plurality of receivers can be sent for one polling, the plurality of receivers may be set all at once. With regard to the format, a constitution may be conceived, in which the destination identifier is repeated a plurality of times. Another format is configured to be a bitmap, in which each position in the bitmap is made to correspond to each node, and the notification is made by setting bits corresponding to the node identifiers of the receivers.

With regard to usage of the send status, it is convenient that the notification of the send status corresponding to each receiver can be made, but it is conceived that the size of the packet becomes excessively large. In such a case, the notification of the asynchronous packet wanted to be sent most preferentially may be made as the send status.

### (6) Asynchronous packet send completion status

On completing reception of the asynchronous packet, each node notifies the hub station of completion status. The completion of the transaction means that all the asynchronous packets of the transaction response have been sent. As the asynchronous packet send completion status, there are the following types of status.
- Without completed transaction
- With completed transaction

On being notified of the status with the completed transaction, the hub station releases the transaction label.

### (7) Asynchronous packet send completion destination node identifier

When the asynchronous packet send completion status is the status with the completed transaction, the asynchronous packet send completion destination node identifier is set to the sender of the asynchronous packet.

### (8) Completed transaction label

When the asynchronous packet send completion status is the status with the completed transaction, the completed transaction label is set to a value of the transaction label to be released.

Next, description will be made on the data area. The data area is composed of two areas of the isochronous area and the asynchronous transmission area.

In the IEEE 1394, there are two data transfer modes of isochronous and asynchronous transmission. The isochronous transmission is a transfer mode guaranteeing a band, and performs data transfer after previously reserving the band.

In order to guarantee the band similarly in the wireless bus, an isochronous area is previously reserved in the wireless frame. Therefore, in accordance with an amount of band reserved for the isochronous transmission, the size of the isochronous area is varied.

In the asynchronous transmission area, the asynchronous packets are properly transmitted without previously securing the band. The asynchronous packets are sequentially sent in a space area from the end of the management area and the isochronous area in one frame to the start of a next frame.

One transaction request or response is divided into the plurality of asynchronous packets to be sent.

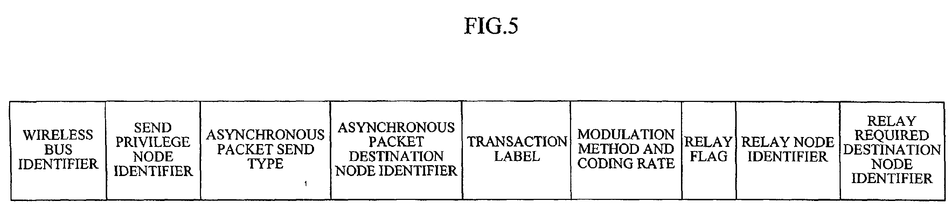

The asynchronous transmission is performed by a polling control from the hub station. Specifically, the hub station sends the polling packet containing the node identifier which the send privilege is to be given, and the node having obtained the send privilege starts to send the asynchronous packets. The polling packet contains, for example as shown in Fig. 5, the following bits of information. However, all the bits of information are not necessarily provided.

### (1) Wireless bus identifier

The wireless bus identifier is used for identifying the wireless bus in a case where another wireless bus exists in the vicinity thereof. The wireless bus identifier may be unnecessary when there is another identifying means such as a method of identifying the network by a scramble pattern.

### (2) Send privilege node identifier

Each terminal in the wireless bus judges a field indicating the send privilege in the polling packet. When the field is set to its own node identifier, the terminal starts to send the asynchronous data based on the following parameters (asynchronous packet send privilege type, asynchronous packet destination node identifier, transaction label, modulation method and coding rate, relay flag, relay node identifier).

### (3) Asynchronous packet send privilege type

The asynchronous packet send privilege type indicates a type of the given send privilege of the asynchronous packet. As the asynchronous packet send privilege type, there are the following types. The asynchronous packet send privilege type is set to a value in accordance with the asynchronous packet send status of the status report packet.
- New transaction send privilege
- Normal transaction send privilege

### (4) Asynchronous packet destination node identifier

The asynchronous packet destination node identifier is set to the destination node identifier of the given asynchronous packet send privilege. Each node always checks this field and must prepares reception based on the following parameters (modulation method and coding rate, relay flag, relay node identifier), when the field is set to the node itself.

### (5) Transaction label

When the asynchronous packet send privilege type is the new transaction send privilege, the transaction label is set to the transaction allocated by the hub station.

### (6) Modulation method and coding rate

The modulation method and coding rate is set to the modulation method and coding rate to be used for sending the asynchronous packets.

### (7) Relay flag

The relay flag indicates whether or not the relay is necessary.

### (8) Relay node identifier

When the relay flag indicates that relay is necessary, the relay node identifier indicates the identifier of the relay node.

### (9) Relay required destination node identifier

When the plurality of receiver are specified, the relay required destination node identifier indicates which receiver thereamong the relay is required for. With regard to the format, a constitution may be conceived, in which the relay required destination node identifier is repeated a plurality of times. Another format is configured to be a bitmap, in which each position in the bitmap is made to correspond to each node, and the notification is made by setting bits corresponding to the relay required destination node identifiers.

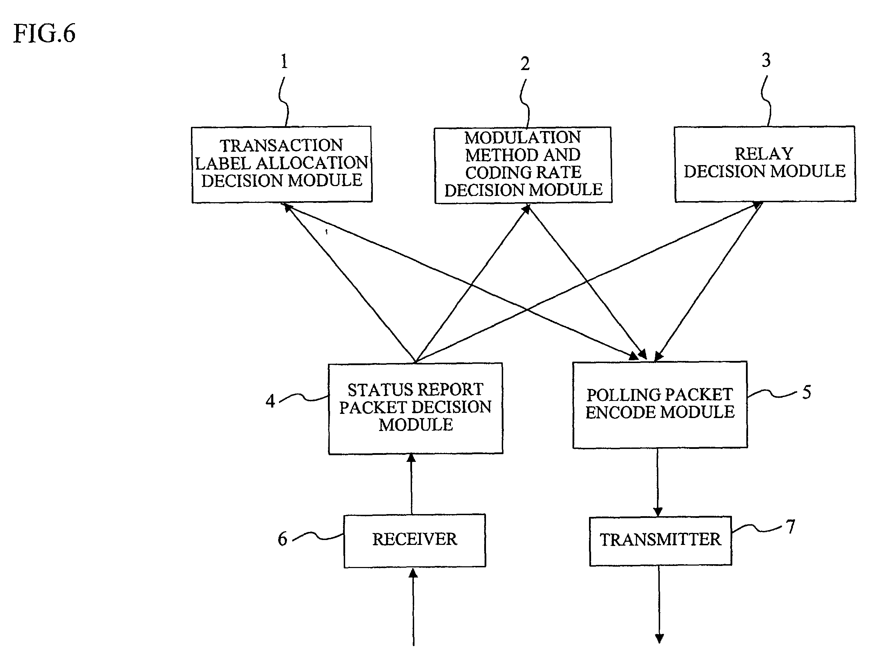

Next, description will be made on a schematic constitution of the hub station in the embodiment in conjunction with Fig. 6. In Fig. 6, a status report packet decision module 4 judges contents of the status report packet received by a receiver 6, and notifies a transaction label allocation decision module 1, a modulation method and coding rate decision module 2, and a relay decision module 3 of the contents.

The transaction label allocation decision module 1 allocates the transaction label based on the contents of which the transaction label allocation decision module 1 is notified by the status report packet decision module 4.

The modulation method and coding rate decision module 2 selects the optimum modulation method and coding rate based on the contents of which the modulation method and coding rate decision module 2 is notified by the status report packet decision module 4. The relay decision module 3 determines whether or not the relay is to be performed and decides the relay node based on the contents of which the relay decision module 3 is notified by the status report packet decision module 4.

A polling packet encode module 5 generates the polling packet based on the contents determined in the transaction label allocation decision module 1, the modulation method and coding rate decision module 2, and the relay decision module 3, and sends the polling packet from a transmitter 7.

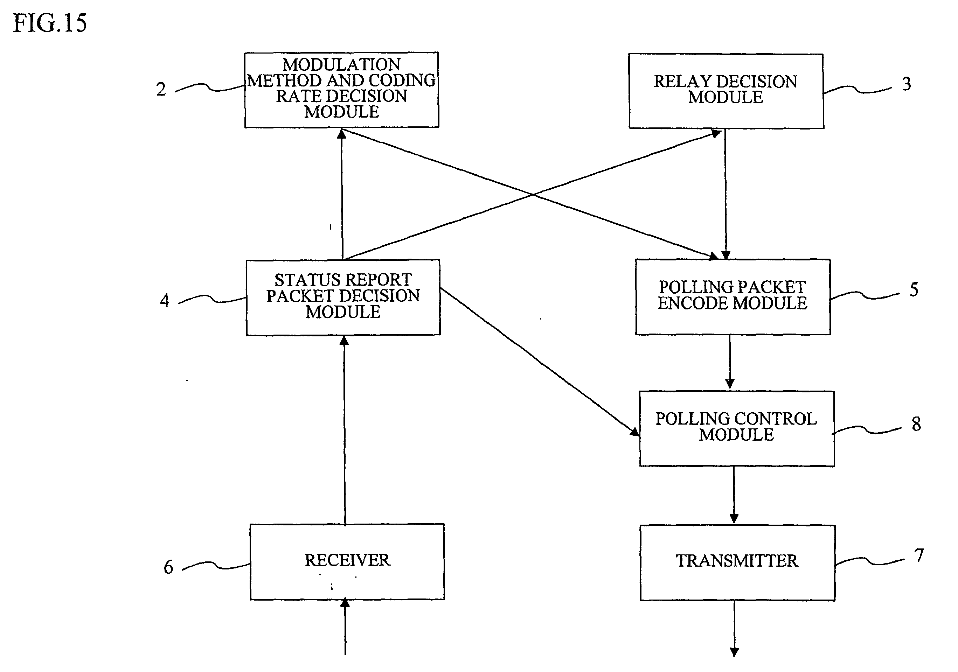

Next, description will be made on another schematic constitution of the hub station in the embodiment in conjunction with Fig. 15. In Fig. 15, the status report packet decision module 4 judges the contents of the status report packet received by the receiver 6, and notifies the modulation method and coding rate decision module 2, the relay decision module 3, and a polling control module 8 of the contents.

The modulation method and coding rate decision module 2 selects the optimum modulation method and coding rate based on the contents of which the modulation method and coding rate decision module 2 is notified by the status report packet decision module 4. The relay decision module 3 determines whether or not the relay is performed and decides the relay node based on the contents of which the relay decision module 3 is notified by the status report packet decision module 4.

The polling packet encode module 5 generates the polling packet based on the contents determined by the modulation method and coding rate decision module 2 and the relay decision module 3, and gives the polling packet to the polling control module 8.

The polling control module 8 determines a sending order of the polling packet based on the contents given from the status report packet decision module 4, and gives the polling packet to the transmitter 7.

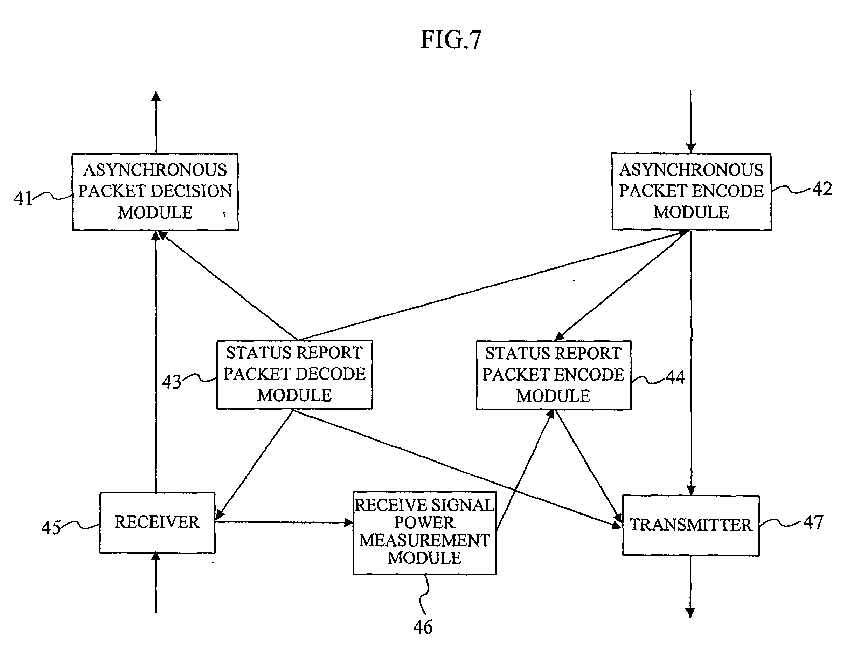

Furthermore, description will be made on a schematic constitution of the node in the embodiment in conjunction with Fig. 7. In Fig. 7, an asynchronous packet encode module 42 generates the asynchronous packet and sends the asynchronous packet to a transmitter 47. The asynchronous packet encode module 42 notifies a status report packet encode module 44 of a sending request before sending the asynchronous packet.

The status report packet encode module 44 generates the status report packet based on the sending request of the asynchronous packet from the asynchronous packet encode module 42 and the receive signal power measured in a receive signal power measurement module 46, and sends the status report packet to a transmitter 47. A receiver 45 notifies an asynchronous packet decision module 41 or a status report packet decode module 43 based on the type of the received packet.

The status report packet decode module 43 judges the contents of the polling packet received by the receiver 45, and notifies the asynchronous packet decision module 41, the asynchronous packet encode module 42, the transmitter 47, and the receiver 45.

The asynchronous transmission is divided into two phases to be executed. One is a request phase of the asynchronous transmission, in which the asynchronous transmission is requested through the status report packet of the management area in the frame.

The other is a sending phase, in which each node actually sends the asynchronous packet in the asynchronous transmission area in the wireless frame in accordance with the polling from the hub station based on the request.

In the request phase, when the status report area is started, each node generates the status report packet. First, the node sets the identifier of the wireless bus which the node itself belongs to and its own source node identifier.

The receive status of another node is generated from the receive signal power at the time of receiving the packet sent from another node in the status report area in the frame just before the current frame.

When the asynchronous packet sending request is received from the application, the fields of the asynchronous packet send status and the asynchronous packet destination node identifier are set to proper values.

When the first asynchronous packet of the transaction request is to be sent, the asynchronous packet send status is set to the status of waiting for new transaction sending. When the asynchronous packet other than the first asynchronous packet is sent, the asynchronous packet send status is set to the status of waiting for normal transaction sending.

Simultaneously, the asynchronous packet destination node identifier is set to the destination node identifier. When the asynchronous packet sending request is not received from the application,. the asynchronous packet send status is set to the status of no transaction sending.

When sending of the asynchronous packets is completed in the preceding frame, the status with the completed transaction, the asynchronous packet send completion destination node identifier and the transaction label used in the completed transaction are set in the asynchronous packet send completion status.

Similarly, the following status can be conceived as the asynchronous packet send status. When the asynchronous packet other than the ACK packet is sent, the asynchronous packet send status is set to the status of waiting for asynchronous packet sending. When the ACK packet is sent, the asynchronous packet send status is set to the status of waiting for ACK packet sending.

Simultaneously, the asynchronous packet destination node identifier is set to the destination node identifier. When the asynchronous packet sending request is not received from the application, the asynchronous packet send status is set to the status of no asynchronous packet sending.

The hub station, which received the status report packet from each node, first reads the values of the receive status fields, and generates a topology map sequentially. The fields other than the receive status fields are temporally held, because the modulation method and coding rate and the relay determination are made based on the latest topology map, as described later.

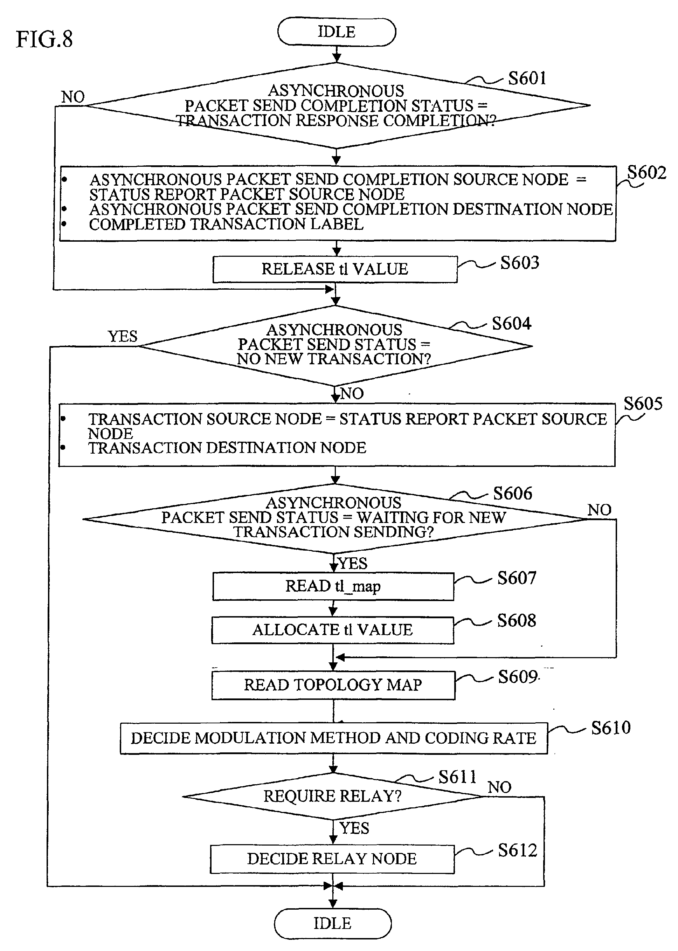

On receiving the status report packets from all the nodes, in accordance with the send status or the completion status of each asynchronous packet reported in the status report packet, the hub station operates as shown in a flowchart of Fig. 8.

First, in accordance with the asynchronous packet send completion status and the asynchronous packet send status in the status report packet, processing for the transaction label is performed. When the asynchronous packet send completion status is the transaction completion, the transaction label is released (S601).

At this time, the asynchronous packet send completion source node is set to the source node of the status report packet (S602). The release of the transaction label is performed by using the asynchronous packet send completion destination node identifier, the asynchronous packet destination node identifier, and the value of the completed transaction label (S603).

When the asynchronous packet send status is not the status of waiting for transaction sending (S604) and the asynchronous packet send status is the status of waiting for new transaction sending (S606), the transaction source node is set to the sender of the status report packet (S605). The allocation processing of the transaction label is performed by using the transaction source node identifier and the transaction destination node identifier (S607, S608).

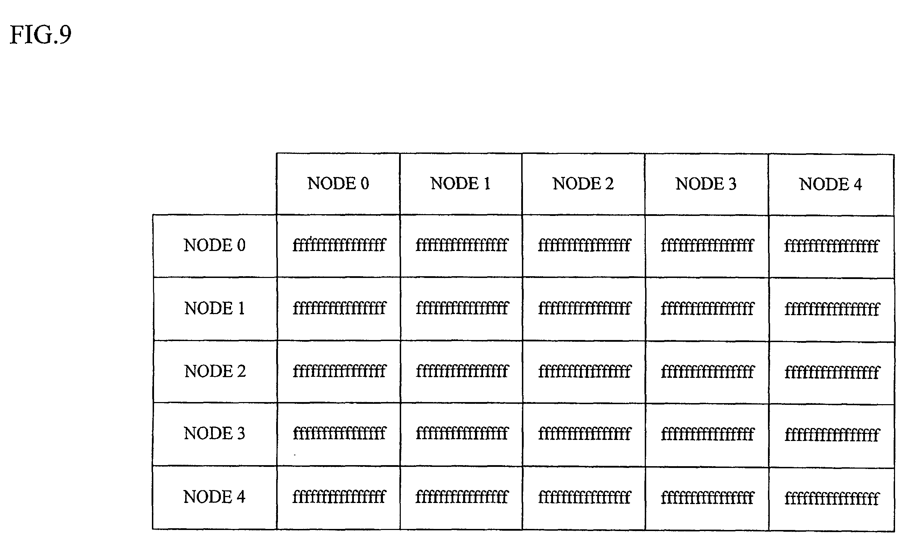

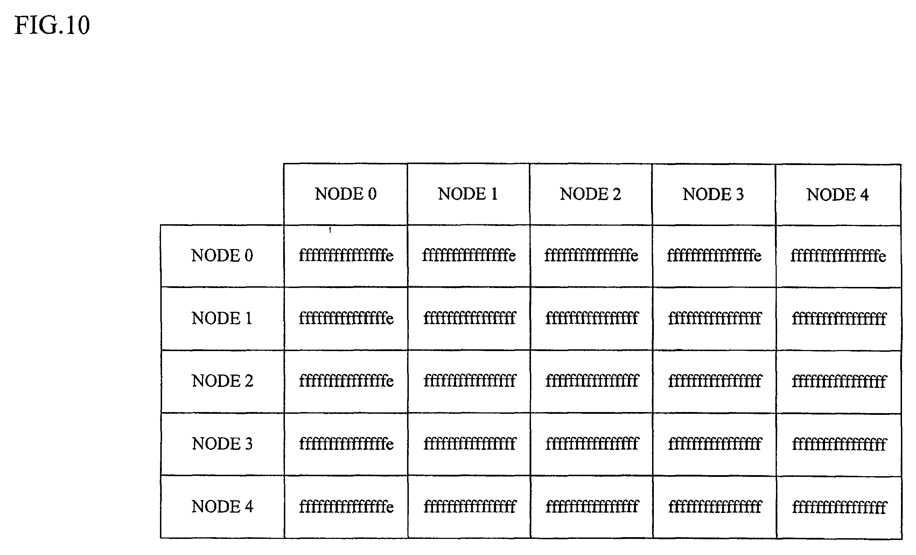

Here, description will be made on a specific example for allocation and release of the transaction label in conjunction with Figs. 9 to 12. In the IEEE 1394, the transaction label is provided for identification of the transaction.

For determination of the transaction label, all the nodes in the IEEE 1394 bus need to observe the asynchronous packet. However, since the different modulation method and coding rates are mixed and the hidden terminal exists in the wireless environment, it becomes impossible for all the nodes to always observe the asynchronous packet.

Therefore, in the wireless bus of the embodiment, the transaction label is integratedly managed by the hub station. The node which wants to issue the transaction requests the transaction allocation of the hub station through the status report packet. Such request is carried out only in a case that the asynchronous packet send status is the status of waiting for new transaction sending (Japanese Patent Application 2000-027475).

For management of the transaction, the hub station has a table as shown is Fig. 9. The values in the table are integer values, and indicate the allocation condition of the transaction label.

When the value of a given bit of the integer is 1, the value indicating a bit position of the given bit is available for the transaction label. When the value of a given bit is 0, the value indicating a bit position of the given bit is in use as the transaction label.

In the embodiment, the length of the transaction label is assumed to be six bits, so that each value in the table has a bit length of 64. At the same time, in the state shown in Fig. 9, all the values are ffffffffffffffff (16) ((16) indicates a hexadecimal). This means that none of the transaction labels is in use in all the nodes, in other words, the state is equivalent to the initial state.

For example, description will be made how the table is used in a case where the transaction allocation request is received when the node 0 executes the transaction with the node 1.

The hub station having determined to perform the transaction label allocation processing reads the value in the table based on the parameter appended to the transaction allocation request, specifically, the identifier of the node making the request and the destination node identifier. In this example, the transaction source node identifier is 0, and the transaction destination node identifier is 1.

As described above, since the corresponding value in the table is ffffffffffffffff (16) in this state, any value can be used as the transaction label. Accordingly, when the hub station determines to use 0 as the transaction label, the hub station returns 0 to the node 0 as a result of the allocation processing. Moreover, the hub station clears the value in the bit position of 0 in each field concerning the nodes 0 and 1, in other words, changes the value to fffffffffffffffe (16).

Conversely, when the specified transaction label is released, the value in the bit position indicated by the completed transaction label is set to 1 in each field concerning the sender and the receiver of the transaction.

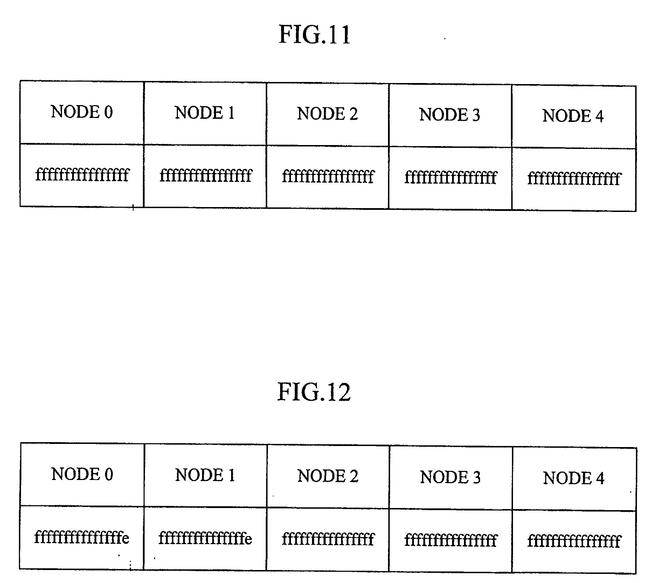

Furthermore, as another constitutional example of the transaction label map, a table as shown in Fig. 11 can be conceived. In this case, with regard to the information to be held, only the value indicating the allocation condition is held for each node.

Here, as in the case of the above described example, when the node 0 issues the transaction label allocation request to the hub station to execute the transaction with the node 1, the hub station allocates as the transaction label the value in the bit position where the conjunction for each bit of the values indicating the allocation conditions of the nodes 0 and 1 is 1. Furthermore, as shown in Fig. 12, the values of the nodes 0 and 1 are changed.

For the release of the specified transaction label, the value is set to 1 in the bit position indicated by the completed transaction labels of the fields of the sender and destination nodes of the transaction. The specific example of the transaction label allocation has been hereinbefore described.

Next, when the asynchronous packet send status is the status of waiting for new transaction sending or waiting for normal transaction sending (S605), the modulation method and coding rate is determined as below (S609, S610).

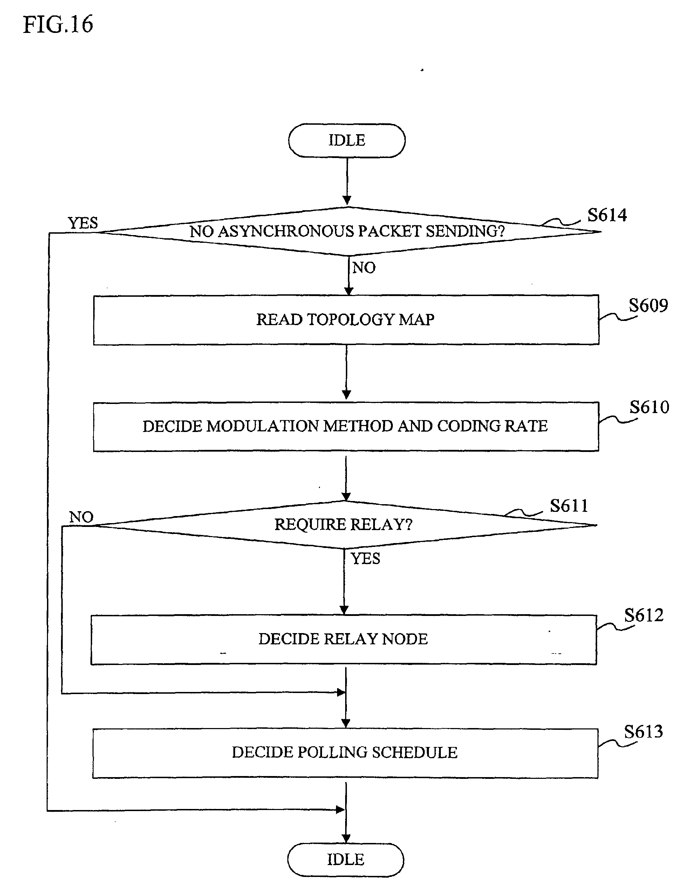

Similarly, another example of the operation in accordance with the send status or completion status of the asynchronous packet reported in the status report packet is shown in a flowchart of Fig.16.

In this case, when the asynchronous packet send status is the status of waiting for asynchronous packet sending or waiting for ACK sending (S614), the modulation method and coding rate is determined as blow (S609, S610).

The hub station generates the topology map indicating the communication condition between certain two nodes based on the information of the receive status from other nodes in the status report packet. The topology map can be generated by tabulating the status report information received by the hub station from each node.

Since there is the premise that the hub station can communicate with all the terminals, the hub station is considered to hold information of highest reliability. A certain node other than the hub station can generate the topology map by receiving the status report. However, it is not guaranteed that the node can always communicate with another node depending on the location or the environment, and there is a possibility of the lack of a part of information of the topology map.

The topology map is updated upon completion of the status report from all the nodes in the management area of each frame. Based on the topology map, the modulation method and coding rate to be used in each transaction is determined.

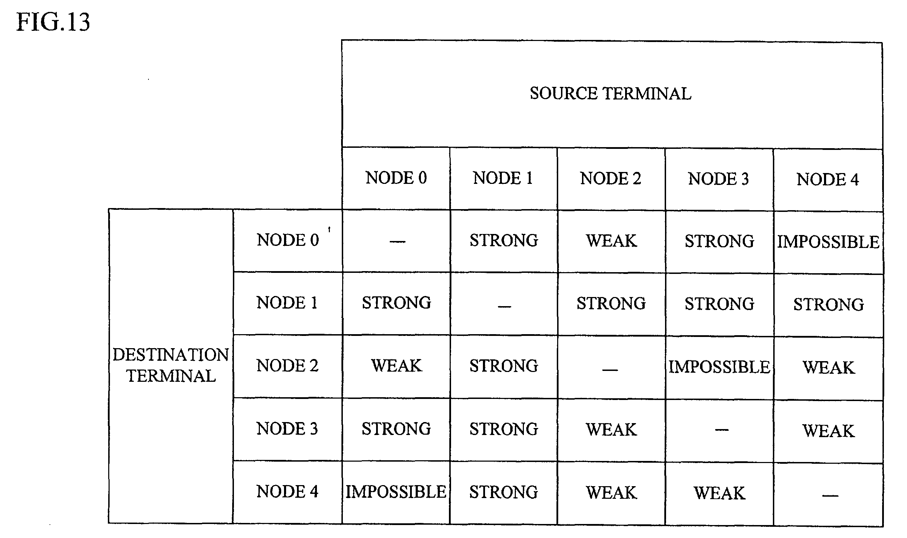

For example, the determination with the topology map state as shown in Fig. 13 is as follows. Specifically, when the transaction sending request, the asynchronous packet sending request, or the ACK sending request is generated between the nodes 0 and 1, the received field intensities are strong in the both directions between the nodes 0 and 1. Accordingly, the modulation method and coding rate realizing the highest speed is selected.

The field intensities in the both directions between the nodes 2 and 4 are low, so that the modulation method and coding rate realizing the lowest speed is selected.

Processing associated with relay is performed at last. Therefore, it becomes possible to determine whether or not the relay is necessary (S611) or decide the relay node by using the above-described topology map (S612).

For example, in the condition that the topology map as shown in Fig. 13 is obtained, the communication between the nodes 2 and 4 is impossible in both directions. Accordingly, the relay becomes necessary for communication between these two nodes.

The hub station can communicate with each of the nodes of course, so that the hub station can be operated as the relay node. Furthermore, other than the hub station, it is possible that the terminal communicatable with both of the nodes 0 and 4 is selected from the topology map to be operated.

For example, in the situation shown in Fig. 13, the node 1 can adequately communicate with each of the nodes 0 and 4 in the both directions, so that the node 1 is considered to be the most appropriate as the relay node.

Next, schematic description will be made on processing in the sending phase. Before the asynchronous transmission area is started, the hub station constructs a polling schedule for the node having made a notification of the asynchronous packet sending request, which is reported in the status report packet (S613).

The polling schedule may be constructed in the order of the node identifiers, or the node which did not send the asynchronous packet in the preceding frame may be prioritized.

For example, as an example of the most advanced control, there is a method, in which the node is prioritized and given the send privilege of the asynchronous packet in accordance with the type of the asynchronous packet sending request. Specifically, in a case where the status of waiting for ACK sending and the status of waiting for asynchronous packet sending are accepted, the polling packet is preferentially sent to the node waiting for ACK sending, and subsequently, the polling packet is sent to the node waiting for asynchronous packet sending. After the polling packets are sent to all the nodes making the sending requests, the polling packets may be satisfactorily sent in the order of the node identifiers.

When the asynchronous transmission area is started, as described above, the hub station determines the parameters necessary for sending the asynchronous packet, constructs the polling packet, and send the polling packet in the order decided by the polling schedule.

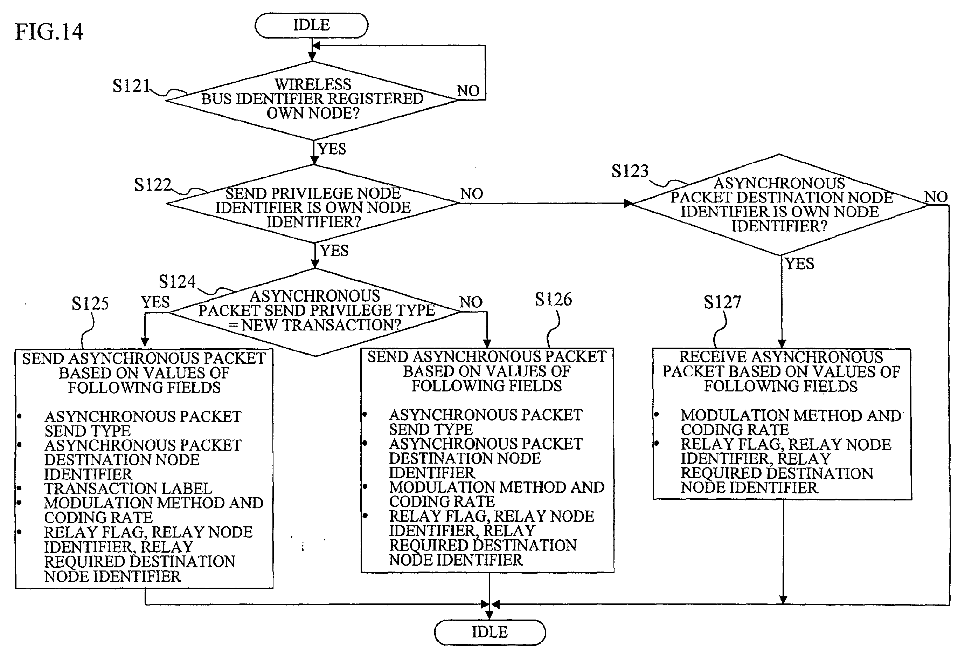

Each of the nodes having received the polling packet employs the procedure shown in a flowchart of Fig. 14. First, each node checks the wireless bus identifier, and confirms that the received polling packet is the one in the wireless bus which the node itself belongs to (S121).

Subsequently, the send privilege node identifier is checked (S122). The state where this field is its own node identifier means that the asynchronous packet send privilege is obtained, and the node starts the sending.

At this time, when the asynchronous packet send privilege type is the new transaction send privilege (S124), the asynchronous packet is constructed of the sending request from the application, the asynchronous packet transmission type, the asynchronous packet destination node identifier, and the transaction label (S125).

When the asynchronous packet send privilege type is the normal transaction send privilege (S124), the asynchronous packet is constructed of the sending request from the application, the asynchronous packet transmission type, and the asynchronous packet destination node identifier (S126).

Subsequently, the packet is sent by the method set in the modulation method and coding rate field. At this time, with regard to the asynchronous packet whose destination is the node in which it is designated by the relay flag or the relay required destination node identifier that the relay is required, the relay is asked for the node indicated by the relay node identifier.

When the send privilege node identifier is not its own node identifier, the node checks the asynchronous packet destination node identifier (S123). When the asynchronous packet destination node identifier is its own node identifier, the node receives the asynchronous packet (S127).

As for the modulation method and coding rate to be used at this time, the modulation method and coding rate field in the polling packet may be checked. Furthermore, the reception processing at the time of relay becomes possible by the relay flag, the relay node identifier, and the relay required destination node identifier.

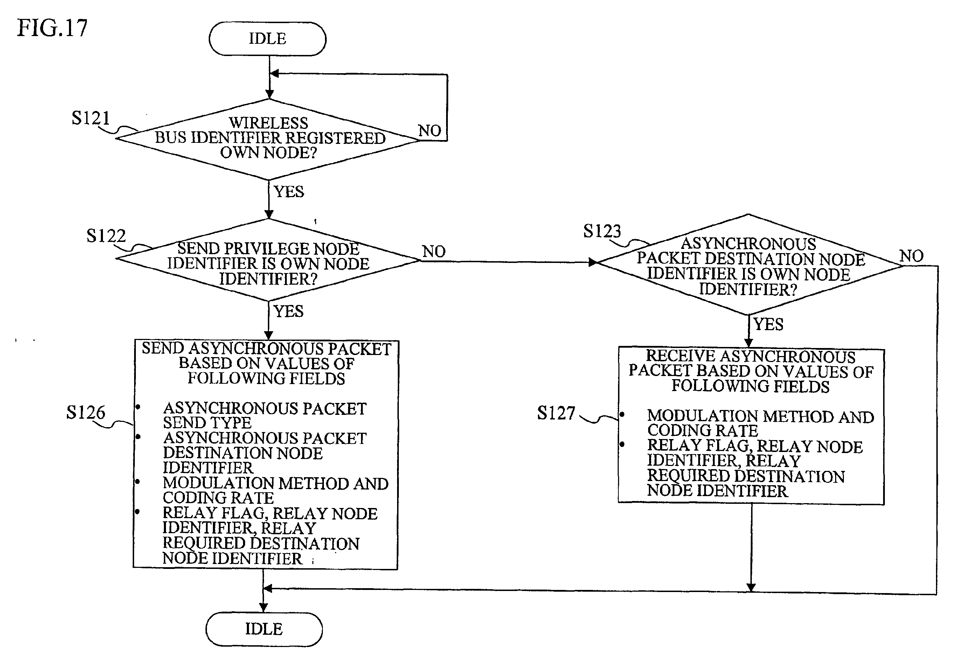

Similarly, another example of the procedure of each of the nodes having received the polling packet is shown in a flowchart of Fig. 17. First, the node checks the wireless bus identifier, and confirms that the received polling packet is the one in the wireless bus which the node itself belongs to (S121).

Subsequently, the send privilege node identifier is checked (S122). The state where the field is its own node identifier means that the asynchronous packet send privilege is obtained, and the node starts the sending.

Furthermore, the asynchronous packet is constructed of the sending request from the application, the asynchronous packet transmission type, and the asynchronous packet destination node identifier (S126).

Thereafter, the node sends the asynchronous packet or the ACK packet by the method set in the modulation method and coding rate field. At this time, with regard to the asynchronous packet whose receiver is the node requiring the relay in the relay flag or the relay required destination node identifier, the relay is asked to the node indicated by the relay node identifier.

When the send privilege node identifier is different from its own node identifier, the node checks the asynchronous packet destination node identifier (S123). When the asynchronous packet destination node identifier indicates its own node identifier, the node receives the asynchronous packet (S127).

As for the modulation method and coding rate to be used at this time, the modulation method and coding rate field in the polling packet may be satisfactorily checked. Furthermore, the reception processing at the time of the relay becomes possible by the relay flag, the relay node identifier, and the relay required destination node identifier.

According to the present invention, the transaction label can be determined even if each node does not monitor the asynchronous packets in the entire wireless bus. Even in the wireless environment where the hidden terminal exists, each node can carry out the transaction by communicating with only the hub station, which can always send/receive to/from each node directly.

The sender and the receiver of the asynchronous packet can be notified of the optimum modulation method and coding rate type and the relay node information in conjunction with the aforementioned allocated transaction label without additional notification procedure provided. Accordingly, the communication procedure can be simplified and the restriction to the user traffic can be minimized.

Furthermore, the status report packet is provided with the area for the asynchronous packet send status therein, so that the asynchronous packet send privilege can be given to the packet sending request of high priority, such as the status of waiting for ACK sending. Accordingly, when transmission band is restricted, the band can be efficiently used as a whole of the wireless bus.

## Claims

1. An asynchronous transmission method in a wireless bus having a star topology constructed by a hub station as a center thereof and two or more wireless terminals, the method comprising the steps of:
providing fields for indicating asynchronous packet send status and an asynchronous packet destination terminal in a status report packet, which reports receive status of another terminal to the hub station for data communication between the plurality of wireless terminals; and
notifying the hub station of a request for sending of an asynchronous packet by use of the status report packet from each of the wireless terminal.

2. The asynchronous transmission method according to claim 1, wherein the hub station allocates a transaction label based on the asynchronous packet send status and the asynchronous packet destination terminal, of which the hub station is notified.

3. The asynchronous transmission method according to claim 2, wherein, when a send privilege of the asynchronous packet is sent to each wireless terminal by polling, the hub station notifies the source terminal of the asynchronous packet of the transaction label in a polling packet.

4. The asynchronous transmission method according to claim 1, wherein, when a send privilege of the asynchronous packet is sent to each wireless terminals by polling, the hub station determines an optimum modulation method and coding rate between the source terminal and the destination terminal of the asynchronous packet based on the receive status information, the asynchronous packet send status, and the asynchronous packet destination terminal, which are reported in the status report packet, and the hub station notifies the source terminal and the destination terminal of the asynchronous packet of the determined optimum modulation method and coding rate in the polling packet.

5. The asynchronous transmission method according to claim 1, wherein when a send privilege of the asynchronous packet is sent to each wireless terminal by polling, the hub station judges whether or not relay is necessary between the source terminal and the destination terminal of the asynchronous packet based on the receive status information, the asynchronous packet send status, and the asynchronous packet destination terminal, which are reported in the status report packet, and the hub station notifies the source terminal of the asynchronous packet of a result of the judgment in the polling packet.

6. The asynchronous transmission method according to any one of claims 3 to 5, wherein each wireless terminal having obtained the send privilege of the asynchronous packet by the polling of the hub station sends the asynchronous packet based on the information, of which the wireless terminal is notified in the polling packet.

7. The asynchronous transmission method according to claim 6, wherein the wireless terminal designated as the destination terminal of the asynchronous packet by the polling of the hub station receives the asynchronous packet.

8. The asynchronous transmission method according to any one of claims 1 to 7, wherein the status report packet is further provided with fields indicating asynchronous packet send completion status, an asynchronous packet send completion destination terminal, and the used transaction label, and the wireless terminal notifies the hub station of send completion of the asynchronous packet through the status report packet.

9. The asynchronous transmission method according to claim 8, wherein the hub station releases the transaction label based on the asynchronous packet send completion status, the asynchronous packet send completion destination terminal, and the transaction label, of which the hub station is notified.

10. The asynchronous transmission method according to claim 1, wherein the hub station gives a send privilege of the asynchronous packet to each wireless terminal by polling, determines a polling priority from the asynchronous packet send status reported in the status report packet, and sends a polling packet in accordance with the priority.

11. The asynchronous transmission method according to claim 10, wherein the asynchronous packet send status includes types of the asynchronous packet and an acknowledge signal (ACK).

12. The asynchronous transmission method according to any one of claims 10 and 11, wherein the asynchronous packet send status includes a type of retry.

13. The asynchronous transmission method according to any one of claims 1 and 5, wherein the notification is made for the plurality of asynchronous packet destination terminals.

14. The asynchronous transmission method according to claim 13, wherein the asynchronous packet source terminal is notified of the asynchronous packet destination terminal requiring the relay among the plurality of asynchronous packet destination terminals.
